# EUROPEAN PATENT APPLICATION

(11) **EP 4 622 035 A1**
(43) Date of publication of application: **24.09.2025**
(21) Application number: 24762947.0
(22) Date of filing: 31.01.2024
(51) Int. Cl.: H02H 11/00, H02J 1/10

(54) **POWER SOURCE ACCESS SYSTEM, POWER SUPPLY APPARATUS AND ELECTRICAL APPARATUS**

(30) Priority: 27.02.2023 CN 202310215104
(71) Applicant: Huawei Technologies Co., Ltd., Shenzhen, Guangdong 518129 (CN)
(72) Inventor: XING, Zengping, Shenzhen, Guangdong 518129 (CN); LV, Haifeng, Shenzhen, Guangdong 518129 (CN)
(74) Representative: Gill Jennings & Every LLP
(86) International application number: PCT/CN2024/074915
(87) International publication number: WO 2024/179264

(57) **Abstract**

This application discloses a power access system, a power supply apparatus, and a power-consuming apparatus. After a power supply is connected to a power supply forward voltage collection port and a power supply reverse voltage collection port of a power access circuit, a decision maker is used to sample a potential of the power supply reverse voltage collection port and a potential of a power supply port. If it is determined that connection is correct, the decision maker outputs a conduction signal to enable a controller to connect a loop. If it is determined that connection is reverse, the decision maker outputs a cut-off signal to enable the controller to disconnect the loop. The power access circuit prevents a short circuit and a current rush caused by reverse power supply connection. When the power supply is reversely connected, an open-circuit impedance is high. When the power supply is correctly connected, a conductive impedance is extremely low. This ensures that the power access circuit has extremely low power consumption. The power access circuit is self-consistent. To be specific, when the power supply is reversely connected, and supplies power to a load via the power access circuit, the power supply only disconnects itself, and power supplied to the load by another power supply is not affected. When the power supply is correctly connected, and supplies the power to the load via the power access circuit, the power supply can normally supply the power to the load.

## Description

### CROSS-REFERENCE TO RELATED APPLICATIONS

This application claims priority to Chinese Patent Application No. 202310215104.3, filed with the China National Intellectual Property Administration on February 27, 2023 and entitled "POWER ACCESS SYSTEM, POWER SUPPLY APPARATUS, AND POWER-CONSUMING APPARATUS", which is incorporated herein by reference in its entirety.

### TECHNICAL FIELD

This application relates to the field of power supply technologies, and in particular, to a power access system, a power supply apparatus, and a power-consuming apparatus.

### BACKGROUND

There are a plurality of application scenarios of power supplies, especially parallel connection of batteries. For example, to enhance battery endurance, if one battery is not enough, two or more batteries need to be connected in parallel to supply power. Power supply/battery parallel connection is very important in a system that requires mobile power supply. However, there are usually very strict requirements on the battery parallel connection. For example, usually batteries are required to have a same category and an approximate voltage. If batteries are reversely connected in parallel (generally, a lithium-ion battery has only a conductive impedance of dozens of mΩ), one battery is likely to charge another battery, and a large current I (for example, dozens of amperes or even hundreds of amperes) is generated, causing local heat (power P = I² * R, where R is a line resistance) and even unexpected disasters such as fire and explosion. Therefore, it is important to correctly connect power supplies/batteries in parallel.

However, it is common that a power supply/battery (power supply for short below) is reversely connected to a load due to a human error. A mechanical method and a circuit method are used to prevent the reverse connection. The circuit method is also referred to as an anti-reverse connection system, an anti-reverse connection circuit, or an anti-reverse circuit.

If the power supply is reversely connected to a load system (another power supply system may exist in the load system to supply power to the load), it is better to disconnect the power supply automatically, and the another power supply system in the load system still operates normally. This power access circuit is referred to as a self-consistent power access circuit. To be specific, when the power supply is correctly connected to the load system via the power access circuit, the power supply may cooperate with the another power supply system in the load system (if the another power supply system exists in the load system) to supply the power to the load system. If the power supply is reversely connected to the load system via the power access circuit, the power access circuit automatically disconnects and isolates the power supply without affecting the operation of the load system. If one or more power supplies are connected to the load system via the self-consistent power access circuit, and one power supply is reversely connected, a power access circuit of the power supply disconnects and isolates the power supply, and another power supply can still operate. This can ensure safety and reliability of power supplied to the system. Therefore, it is better that the power access circuit is self-consistent.

Currently, a self-consistent power access circuit with an anti-reverse connection function is usually connected to a diode in series at an output end of a power supply. When the power supply is correctly connected, the diode is conducted. When the power supply is reversely connected, the diode is reversely cut off. Because a voltage drop of the diode causes an energy loss, most of output energy of the power supply cannot be used to supply power to a load. To resolve the voltage drop of the diode, a MOS transistor with a small conductive impedance may be connected in series at the output end of the power supply. When the power supply is correctly connected, the MOS transistor is conducted. When the power supply is reversely connected, the MOS transistor is cut off. A resistance of the MOS transistor can be as small as dozens of milliohms or even several milliohms. Therefore, when the MOS transistor is conducted, the voltage drop is small, and the most of the output energy of the power supply can still be loaded to the load. When a plurality of power supplies are connected to a system via anti-reverse connection circuits of MOS transistors, once one power supply is reversely connected, a large current rush is generated at a moment at which the power supply is reversely connected. This causes a short circuit and burns the circuit. Therefore, how to design a power access circuit to implement a self-consistent anti-reverse connection function with high efficiency and low costs is a technical problem urgently to be resolved in this field.

### SUMMARY

This application provides a power access system, a power supply apparatus, and a power-consuming apparatus, to implement a self-consistent anti-reverse connection function, of a power supply, with higher efficiency and lower costs.

According to a first aspect, an embodiment of this application provides a power access circuit, to implement an anti-reverse connection function of a power supply. The power access circuit may specifically include a power supply forward voltage collection port, a power supply reverse voltage collection port, a decision maker, and a controller. A power supply voltage is used to supply power to a load via the power access circuit. The power supply forward voltage collection port is configured to collect a forward power supply voltage provided by a positive electrode of the power supply, and the power supply reverse access port is configured to collect a reverse power supply voltage provided by a negative electrode of the power supply. The decision maker is configured to output a control signal to the controller based on a comparison result of the voltage collected by the power supply forward voltage collection port and the voltage collected by the power supply reverse voltage collection port. The controller is configured to connect or disconnect, based on the control signal, a path through which the power supply voltage supplies the power to the load. The control signal sent by the decision maker to the controller may be specifically a conduction signal, or may be a cut-off signal. When receiving the conduction signal, the controller connects the path through which the power supply voltage supplies the power to the load. When receiving the cut-off signal, the controller disconnects the path through which the power supply voltage supplies the power to the load. The power access circuit prevents a short circuit and a current rush caused by reverse power supply connection. When the power supply is reversely connected, an open-circuit impedance is high. When the power supply is correctly connected, a conductive impedance is extremely low. This ensures that the power access circuit has extremely low power consumption. The power access circuit is self-consistent. To be specific, when the power supply is reversely connected, and supplies the power to the load via the power access circuit, the power supply only disconnects itself, and power supplied to the load by another power supply is not affected. When the power supply is correctly connected, and supplies the power to the load via the power access circuit, the power supply can normally supply the power to the load.

During specific implementation, the controller in the power access circuit may disconnect a power supply loop in which the power supply reverse voltage collection port supplies power to the load, or may disconnect a power supply loop in which the power supply forward voltage collection port supplies power to the load. When the controller in the power access circuit may disconnect the power supply loop in which the power supply reverse voltage collection port supplies the power to the load, the controller may be implemented by using a cost-effective NMOS transistor instead of an expensive PMOS transistor. A conductive impedance of the NMOS transistor is from several milliohms to hundreds of milliohms. This helps reduce conduction power consumption and achieve low costs and high efficiency.

In some embodiments, the power access circuit may specifically include the power supply forward voltage collection port, the power supply reverse voltage collection port, a power supply port, a ground port, the decision maker, and the controller. The power supply forward voltage collection port is configured to be coupled to a positive electrode of a power supply, the power supply reverse voltage collection port is configured to be coupled to a negative electrode of the power supply, and the power supply specifically refers to a to-be-connected direct current power supply or a to-be-connected battery. The power supply port is configured to be coupled to one end of the load, and the ground port is configured to be coupled to the other end of the load. The power supply forward voltage collection port is coupled to the power supply port. A first end of the decision maker is coupled to the power supply reverse voltage collection port, a second end of the decision maker is coupled to the power supply port, and an output end of the decision maker is coupled to a control end of the controller. The decision maker is configured to separately collect the voltage at the power supply reverse voltage collection port and a voltage at the power supply port. When the voltage at the power supply reverse voltage collection port is greater than a specified voltage limit of the power supply port, the decision maker outputs the cut-off signal to the control end of the controller. When the voltage at the power supply reverse voltage collection port is less than the specified voltage limit (for example, the specified limit may be greater than 0.5 V) of the power supply port, the decision maker outputs the conduction signal to the control end of the controller. A first end of the controller is coupled to the power supply reverse voltage collection port, and a second end of the controller is coupled to the ground port. In other words, the controller is coupled between the power supply reverse voltage collection port and the ground port. The controller connects the power supply reverse voltage collection port and the ground port in response to the conduction signal, and disconnects the power supply reverse voltage collection port and the ground port in response to the cut-off signal.

After a to-be-connected power supply is connected to the power supply forward voltage collection port and the power supply reverse voltage collection port of the power access circuit, the power access circuit samples a potential of the power supply reverse voltage collection port and a potential of the power supply port via the decision maker, and determines a status of the potential of the power supply reverse voltage collection port and a status of the potential of the power supply port. If it is determined that the voltage at the power supply reverse voltage collection port is less than the specified voltage limit of the power supply port, it is considered that polarity connection is correct (referred to as correct connection), and the decision maker outputs the conduction signal to enable the controller to connect the loop. If it is determined that the voltage at the power supply reverse voltage collection port is greater than the specified voltage limit of the power supply port, it is considered that polarity connection is reverse (referred to as reverse connection), and the decision maker outputs the cut-off signal to enable the controller to disconnect the loop. The power access circuit prevents the short circuit and the current rush caused by the reverse power supply connection. When the power supply is reversely connected, the open-circuit impedance is high. When the power supply is correctly connected, the conductive impedance is extremely low. This ensures that the power access circuit has extremely low power consumption. The power access circuit is self-consistent. To be specific, when the power supply is reversely connected, and supplies power to the load via the power access circuit, the power supply only disconnects itself, and the power supplied to the load by the another power supply is not affected. When the power supply is correctly connected, and supplies the power to the load via the power access circuit, the power supply can normally supply the power to the load.

In some embodiments, the power access circuit may be applied to a scenario in which a plurality of power supplies are connected in parallel, a plurality of batteries are connected in parallel, or a power supply and a battery are connected in parallel. To be specific, a plurality of power access circuits may form the power access system, and each power access circuit corresponds to one power supply, to implement an anti-reverse connection function of the power supply. The power access circuit may also be used in a charging scenario. A charging power supply (also referred to as a charger) can properly charge a battery connected to the load via the power access circuit, and keep supplying power to the load independently. Specifically, the charging power supply may be connected via the power supply forward voltage collection port and the power supply reverse voltage collection port like a common power supply. In this case, if the charging power supply is reversely connected, an input of the charging power supply may be cut off via the power access circuit. When the charging power supply is correctly connected, the charging power supply may supply the power to the load via the power access circuit, and/or charge another battery connected via the power access circuit. Alternatively, the charging power supply may be directly connected via the power supply port. In this case, it needs to ensure that the charging power supply is correctly connected. When the charging power supply is correctly connected, the charging power supply may directly supply the power to the load, and/or charge another battery connected via the power access circuit.

In an embodiment of this application, to prevent a current rush caused by another power supply to the controller at a moment at which the power supply is reversely connected via the power access circuit, an inductor or magnetic bead may be connected to the power access circuit. Specifically, the inductor or magnetic bead may be disposed in series with any one of the power supply forward voltage collection port, the power supply reverse voltage collection port, the power supply port, and the ground port.

In an embodiment of this application, to obtain a strong current rush resistance capability, the inductor or magnetic bead may be specifically connected between the power supply reverse voltage collection port and the first end of the controller. Alternatively, in another embodiment of this application, the inductor or magnetic bead L may be specifically connected between the ground port and the second end of the controller. Alternatively, in another embodiment of this application, the inductor or magnetic bead may be specifically connected between the power supply forward voltage collection port and the power supply port. The following uses an example in which the inductor or magnetic bead is connected between the power supply reverse voltage collection port and the first end of the controller for description.

In an embodiment of this application, to protect the control end of the controller and implement stable connection of the loop by the controller, a Zener diode may be disposed between the control end of the controller and the second end of the controller, and a Zener value of the Zener diode generally needs to be selected as a value higher than a turn-on voltage of the controller.

In an embodiment of this application, the decision maker may specifically include a sampling resistor and a first switch. One end of the sampling resistor is coupled to the power supply port, and the other end of the sampling resistor is coupled to a first end of the first switch. A second end of the first switch is coupled to the ground port, and a control end of the first switch is coupled to the power supply reverse voltage collection port. A resistance of the sampling resistor may be from thousands of ohms to hundreds of megohms, which is preferably from 10 kΩ to 10 MΩ. The first end of the first switch samples the power supply port via the sampling resistor, the control end of the first switch may directly sample the power supply reverse voltage collection port, and a decision-making signal (including the conduction signal or the cut-off signal) of the decision maker may be directly output to the control end of the controller.

In an embodiment of this application, the decision maker may further include a first current-limiting resistor and/or a second current-limiting resistor. The first current-limiting resistor is connected between the power supply reverse voltage collection port and the control end of the first switch, and the second current-limiting resistor is connected between the first end of the first switch and the control end of the controller. Only the first current-limiting resistor may be disposed in the decision maker, a resistance value of the first current-limiting resistor may be from several kilohms to tens of kilohms, and the control end of the first switch samples the power supply reverse voltage collection port via the first current-limiting resistor. Only the second current-limiting resistor may be disposed in the decision maker. A resistance value of the second current-limiting resistor may be from several kilohms to tens of kilohms, and the decision-making signal (including the conduction signal or the cut-off signal) of the decision maker is output to the control end of the controller via the second current-limiting resistor. Both the first current-limiting resistor and the second current-limiting resistor may be disposed in the decision maker. The following uses an example in which both the first current-limiting resistor and the second current-limiting resistor exist in the decision maker for description.

In an embodiment of this application, to prevent the current rush caused by the another power supply to the controller at the moment at which the power supply is reversely connected via the power access circuit, the decision maker may further include a third current-limiting resistor connected between the ground port and the second end of the first switch. Alternatively, the third current-limiting resistor may be replaced with the inductor or magnetic bead. This is not limited herein.

An operating principle of the decision maker provided in embodiments of this application is as follows: When the power supply is correctly connected via the power supply forward voltage collection port and the power supply reverse voltage collection port, that is, a potential of the power supply forward voltage collection port is high and the potential of the power supply reverse voltage collection port is low, the control end of the first switch is at a low voltage, the first switch is turned off, and the first end of the first switch is at a high voltage. The second current-limiting resistor outputs a high voltage to the control end of the controller. In this way, the controller can connect the loop, the power supply reverse voltage collection port and the ground port are connected, and the power supply forward voltage collection port successfully supplies power to the power supply port in a forward manner. When the power supply is reversely connected via the power supply forward voltage collection port and the power supply reverse voltage collection port, that is, the potential of the power supply forward voltage collection port is low and the potential of the power supply reverse voltage collection port is high, the control end of the first switch is at a high voltage, the first switch is turned on, and the first end of the first switch is at a low voltage. The second current-limiting resistor outputs a low voltage to the control end of the controller. In this way, the controller can disconnect the loop, and the power supply reverse voltage collection port and the ground port are disconnected. This achieves self-consistent anti-reverse logic.

Specifically, in an embodiment of this application, the first switch may be specifically a negative-channel metal-oxide semiconductor (negative-channel metal-oxide semiconductor, NMOS) transistor. A gate (G) of the NMOS transistor is used as the control end of the first switch, a drain (D) of the NMOS transistor is used as the first end of the first switch, and a source (S) of the NMOS transistor is used as the second end of the first switch.

The NMOS transistor is used as the first switch. When the power supply is correctly connected via the power supply forward voltage collection port and the power supply reverse voltage collection port, that is, the potential of the power supply forward voltage collection port is high and the potential of the power supply reverse voltage collection port is low, the gate (G) of the NMOS transistor is at a low voltage, the NMOS transistor is cut off, and the drain (D) of the NMOS transistor is at a high voltage. The second current-limiting resistor outputs the high voltage to the control end of the controller. In this way, the controller can connect the loop, the power supply reverse voltage collection port and the ground port are connected, and the power supply forward voltage collection port successfully supplies the power to the power supply port in the forward manner. When the power supply is reversely connected via the power supply forward voltage collection port and the power supply reverse voltage collection port, that is, the potential of the power supply forward voltage collection port is low and the potential of the power supply reverse voltage collection port is high, the gate (G) of the NMOS transistor is at a high voltage, the NMOS transistor is conducted, and the drain (D) of the NMOS transistor is at a low voltage. The second current-limiting resistor outputs the low voltage to the control end of the controller. In this way, the controller can disconnect the loop, and the power supply reverse voltage collection port and the ground port are disconnected. This achieves the self-consistent anti-reverse logic.

Alternatively, in another embodiment of this application, the first switch may be specifically an NPN-type triode. A base (B) of the NPN-type triode is used as the control end of the first switch, a collector (CL) of the NPN-type triode is used as the first end of the first switch, and an emitter (E) of the NPN-type triode is used as the second end of the first switch. The triode is more cost-effective than the NMOS transistor, but consumes more power.

When the NPN-type triode is used to replace the NMOS transistor, the resistance value of the first current-limiting resistor needs to be calculated based on a needed current amplification multiple. Specifically, it is assumed that a voltage at the to-be-connected power supply is V_{bat}. When the power supply is correctly connected via the power supply forward voltage collection port and the power supply reverse voltage collection port, that is, the potential of the power supply forward voltage collection port is high and the potential of the power supply reverse voltage collection port is low, a voltage at a side connecting the first current-limiting resistor and the power supply reverse voltage collection port is low, and a current on the first current-limiting resistor, that is, a base current I_{B} of the NPN-type triode, is very low. Therefore, a current on the sampling resistor, that is, a collector current I_{C} of the NPN-type triode, is also very low, a voltage drop of the sampling resistor is very small, and a voltage V_{CL} at the collector of the NPN-type triode is high. The second current-limiting resistor outputs the high voltage to the control end of the controller. In this way, the controller can connect the loop, the power supply reverse voltage collection port and the ground port are connected, and the power supply forward voltage collection port successfully supplies the power to the power supply port in the forward manner. When the power supply is reversely connected via the power supply forward voltage collection port and the power supply reverse voltage collection port, that is, the potential of the power supply forward voltage collection port is low and the potential of the power supply reverse voltage collection port is high, the current I_{B} on the first current-limiting resistor = (V_{C} + V_{bat} - V_{be})/R2. It is assumed that an amplification multiple of the NPN-type triode is β. The voltage drop of the sampling resistor is V_{R1} = R1 * β * (V_{C} + V_{bat} - 0.7)/R2. A voltage at a CL point is V_{CL} = V_{C} - β * R1 * (V_{C} + V_{bat} - 0.7)/R2. After a specific degree of tolerance is reserved, Vₕ is still less than the turn-on voltage Vₜₕ of the controller. In this case, the controller may be controlled to be in a disconnected state, and the power supply reverse voltage collection port and the ground port are disconnected. This achieves the self-consistent anti-reverse logic. Herein, V_{be} ≈ 0.7 V.

Alternatively, in another embodiment of this application, when the power access circuit is applied to some complex environments, a case in which the load fluctuates greatly, or a case in which there are some other unstable power supplies connected to the load, a voltage of the loop of the power access circuit is easily affected, an optical switch may be used to perform optical coupling isolation control on the first switch, and the optical switch may specifically use a triode for output, or may use a MOS transistor for output. Alternatively, in another embodiment of this application, a relay may be used to perform isolation control on the first switch.

For example, the first switch is the optical switch. When the power supply is correctly connected via the power supply forward voltage collection port and the power supply reverse voltage collection port, that is, the potential of the power supply forward voltage collection port is high and the potential of the power supply reverse voltage collection port is low, a light emitting diode of the optical switch is in a reverse cut-off state, the triode of the optical switch is in a low current or cut-off state, the voltage drop of the sampling resistor is very small, and potentials at both ends of the sampling resistor are approximate and are high. The second current-limiting resistor outputs the high voltage to the control end of the controller. In this way, the controller can connect the loop, the power supply reverse voltage collection port and the ground port are connected, and the power supply forward voltage collection port successfully supplies the power to the power supply port in the forward manner. When the power supply is reversely connected via the power supply forward voltage collection port and the power supply reverse voltage collection port, that is, the potential of the power supply forward voltage collection port is low and the potential of the power supply reverse voltage collection port is high, the triode is conducted via the light emitting diode of the optical switch, the voltage drop of the sampling resistor is large, and a voltage at one end that is coupled to the sampling resistor and the second current-limiting resistor is low. The second current-limiting resistor outputs the low voltage to the control end of the controller. In this way, the controller can disconnect the loop, and the power supply reverse voltage collection port and the ground port are disconnected. This achieves the self-consistent anti-reverse logic.

In an optical coupling isolation manner, impact of fluctuation of the another power supply on the voltage of the loop of the power access circuit can be prevented. This affects a decision-making result of the decision maker. In some scenarios in which interference in an environment is strong and fluctuation of a signal of the load is complex, a case in which the power access circuit is affected by the interference can be effectively prevented.

In an embodiment of this application, the controller may specifically include a second switch, a control end of the second switch is coupled to the output end of the decision maker, a first end of the second switch is coupled to the power supply reverse voltage collection port, and a second end of the second switch is coupled to the ground port.

In an embodiment of this application, the second switch may be specifically an NMOS transistor, and a gate (G) of the NMOS transistor is used as the control end of the second switch. The NMOS transistor is cost-effective, and a conductive impedance may be as low as several milliohms. When the NMOS transistor is normally conducted, energy consumed may be ignored (only several milliwatts are consumed when power of 1 A is supplied). When the power supply is correctly connected via the power supply forward voltage collection port and the power supply reverse voltage collection port, that is, the potential of the power supply forward voltage collection port is high and the potential of the power supply reverse voltage collection port is low, the first switch is turned off. The second current-limiting resistor outputs a high voltage to the gate (G) of the NMOS transistor. In this way, the NMOS transistor can connect the loop, the power supply reverse voltage collection port and the ground port are connected, and the power supply forward voltage collection port successfully supplies the power to the power supply port in the forward manner. When the power supply is reversely connected via the power supply forward voltage collection port and the power supply reverse voltage collection port, that is, the potential of the power supply forward voltage collection port is low and the potential of the power supply reverse voltage collection port is high, the first switch is turned on. The second current-limiting resistor outputs a low voltage to the gate (G) of the NMOS transistor. In this way, the NMOS transistor can disconnect the loop, and the power supply reverse voltage collection port and the ground port are disconnected. This achieves the self-consistent anti-reverse logic.

Alternatively, in another embodiment of this application, the second switch may be specifically a relay, an optical switch, or the like. This is not limited herein.

In the foregoing power access circuit provided in embodiments of this application, the NMOS transistor that is cost-effective and easy to obtain and whose conductive impedance is low is used as the switch. In this way, when the power supply is correctly connected, a conduction loss of the power access circuit is small. When the power supply is reversely connected, the connected loop is disconnected, and almost no loss occurs. This achieves self-consistent access. Further, it is considered that a current may change abruptly for short time when the power supply is reversely connected. This may cause adverse impact on the controller, the inductor or magnetic bead is connected in series to the power access circuit to prevent such current rush. In addition, alternatively, in the power access circuit, an optocoupler triode or an optocoupler MOS control may be used as the switch to isolate the control from the power supply to a specific extent, to prevent misjudgment caused by interference at the control end of the switch. In addition, the power access circuit can help, by providing audible and visible alerts, a user perform correction in time.

When the plurality of power supplies supply power to the load via the plurality of power access circuits connected in parallel, a power supply forward voltage collection port and a power supply reverse voltage collection port of each power access circuit are respectively connected to a positive electrode and a negative electrode of each power supply or battery, a power supply port of each power access circuit is connected to one end of the load, and a ground end of each power access circuit is grounded to the load. Each power access circuit prevents the short circuit and the current rush caused by reverse power supply connection. When the power supply is reversely connected, the open-circuit impedance is high. When the power supply is correctly connected, the conductive impedance is extremely low. This ensures that the power access circuit has extremely low power consumption. The power access circuit is self-consistent. To be specific, when the power supply is reversely connected, and supplies the power to the load via the power access circuit, the power supply only disconnects itself, and the power supplied to the load by the another power supply is not affected. When the power supply is correctly connected, and supplies the power to the load via the power access circuit, the power supply can normally supply the power to the load.

In an embodiment of this application, the power access circuit may further include a prompt circuit connected between the power supply forward voltage collection port and the power supply reverse voltage collection port. The prompt circuit may notify the user of the reverse connection in combination with audible and visible alerts.

Specifically, the prompt circuit may include an integrated circuit chip, a miniature speaker, a diode, and a current amplifier. A positive electrode of the diode is coupled to the power supply reverse voltage collection port, and a negative electrode of the diode is coupled to a first input end of the integrated circuit chip. When the power supply is correctly connected via the power supply forward voltage collection port and the power supply reverse voltage collection port, that is, the potential of the power supply forward voltage collection port is high and the potential of the power supply reverse voltage collection port is low, the diode is reversely cut off, and the prompt circuit does not operate. When the power supply is reversely connected via the power supply forward voltage collection port and the power supply reverse voltage collection port, that is, the potential of the power supply forward voltage collection port is low and the potential of the power supply reverse voltage collection port is high, the diode is forward conducted. Further, a light emitting diode with a color (for example, red or yellow) for alerting may alternatively be used as the diode, and emits light when the light emitting diode is forward conducted. A second input end of the integrated circuit chip is coupled to the power supply forward voltage collection port, and an output end of the integrated circuit chip is coupled to an input end of the current amplifier. The integrated circuit chip incorporates voice prompts like "reverse connection" or "installation error". When the diode is forward conducted, the integrated circuit chip is enabled, and the output end of the integrated circuit chip sends a pre-made voice prompt waveform to the input end of the current amplifier. The current amplifier may include a resistor and a triode. The resistor is connected in series between a base (B) of the triode and the output end of the integrated circuit chip, an emitter (E) of the triode may be coupled to the power supply forward voltage collection port, a collector (CL) of the triode, as an output end of the current amplifier, is coupled to one end of the miniature speaker, the other end of the miniature speaker is coupled to the negative electrode of the diode, and a resistor may alternatively be disposed between the other end of the miniature speaker and the negative electrode of the diode. After amplifying the current, the triode drives the miniature speaker to produce sound, to prompt the user for the reverse connection.

According to a second aspect, this application further provides a power access system. The power access system may include at least two power access circuits according to the first aspect, and each power access circuit corresponds to one power supply. In this way, an anti-reverse connection function of the power supply can be implemented.

According to a third aspect, this application further provides a power supply apparatus. The power supply apparatus may specifically include the power access circuit according to any possible design of the first aspect of this application or the power access system according to the second aspect. To be specific, the power access circuit provided in this embodiment of this application may be disposed on a power supply side, and the power supply apparatus may include one or more power supplies and power access circuits that one-to-one correspond to the power supplies. Power supply ports of the plurality of power access circuits are connected to each other. A power supply port and a ground port of one power access circuit are used as external ports. Identifiers for preventing reverse connection may be set on the external ports. For example, a "+" identifier is used to identify the power supply port, and a "-" identifier is used to identify the ground port.

According to a fourth aspect, this application further provides a power-consuming apparatus. The power-consuming apparatus may specifically include the power access circuit according to any possible design of the first aspect of this application or the power access system according to the second aspect. To be specific, the power access circuit provided in this embodiment of this application may be disposed on a load side, and a load and one or more power access circuits may be disposed in the power-consuming apparatus. One end of the load is grounded, the other end of the load is connected to a power supply port of each power access circuit, and a power supply forward voltage collection port and a power supply reverse voltage collection port of each power access circuit are used as external ports. Identifiers for preventing reverse connection may be set on the external ports, to prevent reverse connection caused by a user operation. For example, a "+" identifier is used to identify the power supply forward voltage collection port, and a "-" identifier is used to identify the power supply reverse voltage collection port.

In an embodiment of this application, when a plurality of parallel power access circuits are disposed in the power-consuming apparatus, the plurality of power access circuits may share a sound generation unit of a same prompt circuit, and the sound generation unit includes an integrated circuit chip, a miniature speaker, a current amplifier, and the like. A plurality of light emitting diodes connected to power supply reverse voltage collection ports of the plurality of power access circuits in a one-to-one correspondence may be disposed in the prompt circuit; positive electrodes of the plurality of light emitting diodes are coupled to the corresponding power supply reverse voltage collection ports; and negative electrodes of the plurality of light emitting diodes are connected to each other and to a resistor in series, and are coupled to a power supply forward voltage collection port of any power access circuit. When a power supply corresponding to a power access circuit is reversely connected, a connected light emitting diode is on. A light emitting diode at a different position being on represents that a corresponding power supply is reversely connected. A user can determine which power supply is reversely connected by viewing the light emitting diode at the different position being on. For example, a first power supply corresponds to a first light emitting diode, and a second power supply corresponds to a second light emitting diode. When the first power supply is reversely connected, the first light emitting diode is on, and the miniature speaker prompts an alert tone. When the second power supply is reversely connected, the second light emitting diode is on, and the miniature speaker prompts an alert tone. When both the first power supply and the second power supply are reversely connected, both the first light emitting diode and the second light emitting diode are on, and the miniature speaker prompts an alert tone. When both the first power supply and the second power supply are correctly connected, both the first light emitting diode and the second light emitting diode are off, and the miniature speaker has no alert tone.

For technical effect that can be achieved by any possible design in any one of the second aspect to the fourth aspect, refer to technical effect that can be achieved by any possible design in the first aspect. Details are not described herein again. These aspects or another aspect of this application is clearer and more comprehensible in descriptions of the following embodiments.

### BRIEF DESCRIPTION OF DRAWINGS

FIG. 1 is a circuit schematic of a conventional anti-reverse connection circuit;
FIG. 2a is another circuit schematic of a conventional anti-reverse connection circuit;
FIG. 2b is another circuit schematic of a conventional anti-reverse connection circuit;
FIG. 3 is another circuit schematic of a conventional anti-reverse connection circuit;
FIG. 4 is a circuit schematic of a power access circuit according to an embodiment of this application;
FIG. 5a is another circuit schematic of a power access circuit according to an embodiment of this application;
FIG. 5b is another circuit schematic of a power access circuit according to an embodiment of this application;
FIG. 5c is another circuit schematic of a power access circuit according to an embodiment of this application;
FIG. 6 is another circuit schematic of a power access circuit according to an embodiment of this application;
FIG. 7a is a specific circuit schematic of a power access circuit according to an embodiment of this application;
FIG. 7b is another specific circuit schematic of a power access circuit according to an embodiment of this application;
FIG. 7c is another specific circuit schematic of a power access circuit according to an embodiment of this application;
FIG. 7d is another specific circuit schematic of a power access circuit according to an embodiment of this application;
FIG. 7e is another specific circuit schematic of a power access circuit according to an embodiment of this application;
FIG. 8a is another specific circuit schematic of a power access circuit according to an embodiment of this application;
FIG. 8b is another specific circuit schematic of a power access circuit according to an embodiment of this application;
FIG. 9 is another circuit schematic of a power access circuit according to an embodiment of this application;
FIG. 10 is another specific circuit schematic of a power access circuit according to an embodiment of this application;
FIG. 11 is a circuit schematic of a power supply apparatus according to an embodiment of this application;
FIG. 12 is a circuit schematic of a power-consuming apparatus according to an embodiment of this application; and
FIG. 13 is a specific circuit schematic of a power supply apparatus according to an embodiment of this application.

Reference numerals:
100: power access circuit, 200: load, 300: power supply, 110: decision maker, 120: controller, 130: prompt circuit, A: power supply forward voltage collection port, B: power supply reverse voltage collection port, C: power supply port, GND: ground port, N1: first switch, N2: second switch, R1: sampling resistor, R2: first current-limiting resistor, R3: second current-limiting resistor, R4: third current-limiting resistor, L: inductor or magnetic bead, D1: Zener diode, D2: diode, IC: integrated circuit chip, S: miniature speaker; H: current amplifier; F1: first light emitting diode; F2: second light emitting diode; and R5: series resistor.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe particular embodiments, but are not intended to limit this application. The singular expression "one", "a/an", "said", "the foregoing", "the", and "this" as used in this specification and the appended claims of this application are also intended to include expressions like "one or more", unless otherwise specified in the context clearly.

Reference to "an embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments", that appear at different places in this specification do not necessarily mean referring to a same embodiment, instead, they mean "one or more but not all of embodiments", unless otherwise specifically emphasized. The terms "include", "contain", "have", and their variants all mean "include but are not limited to", unless otherwise specifically emphasized.

In addition, same reference numerals in the figures represent same or similar structures. Therefore, repeated description thereof is omitted. Expressions of locations and directions in this application are described by using the accompanying drawings as an example. However, changes may also be made as required, and all the changes fall within the protection scope of this application. The accompanying drawings in this application are merely used to illustrate relative position relationships and do not represent an actual scale.

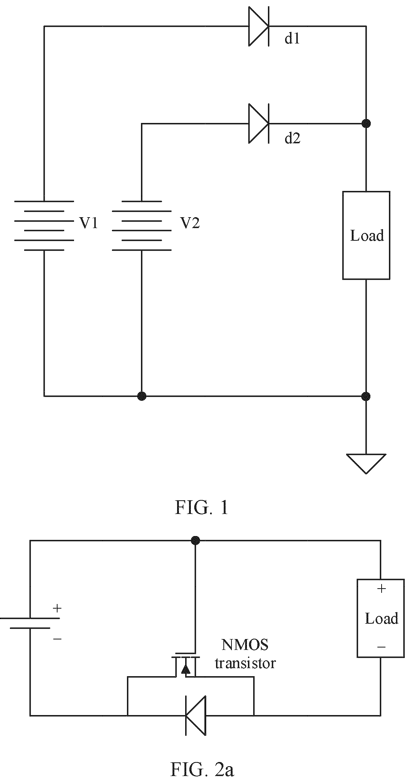

Refer to FIG. 1. Currently, a simplest anti-reverse connection circuit is connecting a diode in series to an output end of a power supply. In FIG. 1, two batteries V1 and V2 are connected in parallel to supply power to a load. The battery V1 is connected in series to a diode d1, and the battery V2 is connected in series to a diode d2. If the battery V2 is reversely connected, the diode d2 is reversely cut off, and the battery V2 has no current output. However, the battery V1 is correctly connected, the diode d1 is forward conducted, and the battery V1 normally supplies power to the load. The batteries V1 and V2 do not affect each other. Although the foregoing circuit can implement a self-consistent anti-reverse connection function, the diode has a large voltage drop (for example, a voltage drop of a common Si diode is 0.7 V, a voltage drop of a common Ge diode is 0.2 V, a larger current indicates a larger voltage drop, and a voltage drop of 1 V is usually reached when a current is 1 A). The large voltage drop causes an energy loss. Consequently, most of output energy of the power supply cannot be used to supply the power to the load, but to the diode. This is unfavorable for mobile power supply.

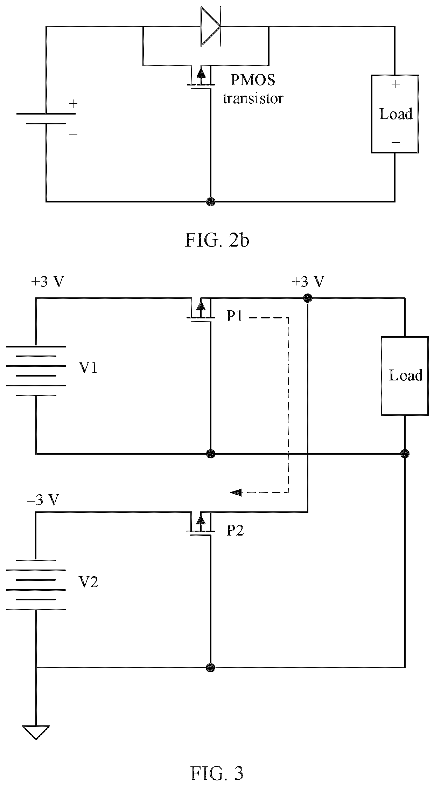

Refer to FIG. 2a and FIG. 2b. To resolve a voltage drop of a diode, in current two common anti-reverse connection circuits, MOS transistors with small conductive impedances are connected in series to output ends of power supplies. For example, in FIG. 2a, an NMOS transistor is connected in series to a negative electrode of a battery, or in FIG. 2b, a PMOS transistor is connected in series to a positive electrode of a battery. When the NMOS transistor and the PMOS transistor are conducted, resistances may be as small as dozens of milliohms or even several milliohms. Even if a current is 1 A, only a voltage drop of dozens of mV or even several mV is caused, and most of the voltage drop of the battery can still be applied to a load. Therefore, the foregoing two circuits can effectively resolve a loss caused by the large voltage drop of the diode.

Refer to FIG. 3. When a plurality of power supplies all use the foregoing power access circuit, in FIG. 3, two batteries V1 and V2 are connected in parallel to supply power to a load. A positive electrode of the battery V1 is connected in series with a PMOS transistor P1, and a positive electrode of the battery V2 is connected in series with a PMOS transistor P2. Once a power supply is reversely connected, a short circuit is easily generated. For example, when the battery V2 is reversely connected, the PMOS transistor P1 being conducted forces the PMOS transistor P2 to be conducted (refer to a dashed arrow in FIG. 3). However, voltages at two ends of the PMOS transistor P2 are 3 V and -3 V (it is assumed that V1=V2=3 V), and a current of tens of hundreds of amperes passes through the PMOS transistor P2 that has a conductive impedance of only tens of hundreds of milliohms. Consequently, the PMOS transistor P2 is easily damaged, that is, a circuit is burnt.

The foregoing existing anti-reverse connection circuit has the following problems: 1. The PMOS transistor is expensive, and the conductive impedance is higher than that of the NMOS transistor with a same price. 2. The anti-reverse connection circuit does not have a good protection mechanism. When the battery is reversely connected, a large current rush is generated. Consequently, the PMOS transistor is easily damaged. Especially in some scenarios with strong vibration, a battery connection contact is frequently switched between an on state or an off state. In this case, the PMOS transistor is easily damaged due to a long-time current rush. 3. In some complex environments, especially when the load is an inductive load (for example, an electromagnetic motor), interference is great. This affects a power supply line and a control loop.

In view of this, embodiments of this application provide a power access system, a power supply apparatus, and a power-consuming apparatus, to implement a self-consistent anti-reverse connection function, of a power supply, with high efficiency and low costs.

The following describes in detail the power access system, the power supply apparatus, and the power-consuming apparatus provided in this application with reference to the accompanying drawings.

The power access system provided in embodiments of this application may include at least two power access circuits, and each power access circuit corresponds to one power supply. In this way, an anti-reverse connection function of the power supply can be implemented. Each power access circuit may specifically include a power supply forward voltage collection port, a power supply reverse voltage collection port, a decision maker, and a controller. A power supply voltage is used to supply power to a load via the power access circuit. The power supply forward voltage collection port is configured to collect a forward power supply voltage provided by a positive electrode of the power supply, and the power supply reverse access port is configured to collect a reverse power supply voltage provided by a negative electrode of the power supply. The decision maker is configured to output a control signal to the controller based on a comparison result of the voltage collected by the power supply forward voltage collection port and the voltage collected by the power supply reverse voltage collection port. The controller is configured to connect or disconnect, based on the control signal, a path through which the power supply voltage supplies the power to the load. The control signal sent by the decision maker to the controller may be specifically a conduction signal, or may be a cut-off signal. When receiving the conduction signal, the controller connects the path through which the power supply voltage supplies the power to the load. When receiving the cut-off signal, the controller disconnects the path through which the power supply voltage supplies the power to the load. The power access circuit prevents a short circuit and a current rush caused by reverse power supply connection. When the power supply is reversely connected, an open-circuit impedance is high. When the power supply is correctly connected, a conductive impedance is extremely low. This ensures that the power access circuit has extremely low power consumption. Each power access circuit is self-consistent. To be specific, when the power supply is reversely connected, and supplies the power to the load via the power access circuit, the power supply only disconnects itself, and power supplied to the load by another power supply is not affected. When the power supply is correctly connected, and supplies the power to the load via the power access circuit, the power supply can normally supply the power to the load.

During specific implementation, the controller in the power access circuit may disconnect a power supply loop in which the power supply reverse voltage collection port supplies power to the load, or may disconnect a power supply loop in which the power supply forward voltage collection port supplies power to the load. When the controller in the power access circuit may disconnect the power supply loop in which the power supply reverse voltage collection port supplies the power to the load, the controller may be implemented by using a cost-effective NMOS transistor instead of an expensive PMOS transistor. A conductive impedance of the NMOS transistor is from several milliohms to hundreds of milliohms. This helps reduce conduction power consumption and achieve low costs and high efficiency.

The following describes the power access circuit in detail by using an example in which the controller in the power access circuit disconnects the power supply loop in which the power supply reverse voltage collection port supplies the power to the load.

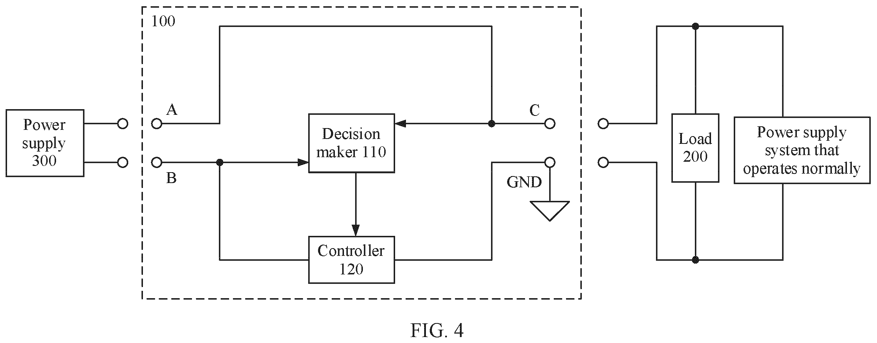

FIG. 4 is an example of a circuit schematic of a power access circuit according to an embodiment of this application.

Refer to FIG. 4. A power access circuit 100 provided in this embodiment of this application may specifically include a power supply forward voltage collection port A, a power supply reverse voltage collection port B, a power supply port C, a ground port GND, the decision maker 110, and the controller 120. The power supply forward voltage collection port A is configured to be coupled to a positive electrode of a power supply 300, the power supply reverse voltage collection port B is configured to be coupled to a negative electrode of the power supply 300, and the power supply 300 specifically refers to a to-be-connected direct current power supply or a to-be-connected battery. The power supply port C is configured to be coupled to one end of a load 200, and the ground port GND is configured to be coupled to the other end of the load 200. The power supply forward voltage collection port A is coupled to the power supply port C. A first end of the decision maker 110 is coupled to the power supply reverse voltage collection port B, a second end of the decision maker 110 is coupled to the power supply port C, and an output end of the decision maker 110 is coupled to a control end of the controller 120. The decision maker 110 is configured to separately collect a voltage at the power supply reverse voltage collection port B and a voltage at the power supply port C. When the voltage at the power supply reverse voltage collection port B is greater than a specified voltage limit of the power supply port C, the decision maker 110 outputs a cut-off signal to the control end of the controller 120. When the voltage at the power supply reverse voltage collection port B is less than the specified voltage limit (for example, the specified limit may be greater than 0.5 V) of the power supply port C, the decision maker 110 outputs a conduction signal to the control end of the controller 120. In an alternative solution, a second end of the decision maker 110 may be coupled to the power supply forward voltage collection port A, and an output end of the decision maker 110 is coupled to a control end of the controller 120. The decision maker 110 is configured to separately collect a voltage at the power supply reverse voltage collection port B and a voltage at the power supply forward voltage collection port A. When the voltage at the power supply reverse voltage collection port B is greater than a specified voltage limit of the power supply forward voltage collection port A, the decision maker 110 outputs a cut-off signal to the control end of the controller 120. When the voltage at the power supply reverse voltage collection port B is less than the specified voltage limit (for example, the specified limit may be greater than 0.5 V) of the power supply forward voltage collection port A, the decision maker 110 outputs a conduction signal to the control end of the controller 120. A first end of the controller 120 is coupled to the power supply reverse voltage collection port B, and a second end of the controller 120 is coupled to the ground port GND. In other words, the controller 120 is coupled between the power supply reverse voltage collection port B and the ground port GND. The controller 120 connects the power supply reverse voltage collection port B and the ground port GND in response to the conduction signal, and disconnects the power supply reverse voltage collection port B and the ground port GND in response to the cut-off signal.

After a to-be-connected power supply is connected to the power supply forward voltage collection port A and the power supply reverse voltage collection port B of the power access circuit 100, the power access circuit 100 provided in this embodiment of this application samples a potential of the power supply reverse voltage collection port B and a potential of the power supply port C (or the power supply forward voltage collection port A) via the decision maker 110, and determines a status of the potential of the power supply reverse voltage collection port B and a status of the potential of the power supply port C (or the power supply forward voltage collection port A). If it is determined that the voltage at the power supply reverse voltage collection port B is less than the specified voltage limit of the power supply port C (or the power supply forward voltage collection port A), it is considered that polarity connection is correct (referred to as correct connection), and the decision maker 110 outputs the conduction signal to enable the controller 120 to connect a loop. If it is determined that the voltage at the power supply reverse voltage collection port B is greater than the specified voltage limit of the power supply port C (or the power supply forward voltage collection port A), it is considered that polarity connection is reverse (referred to as reverse connection), and the decision maker 110 outputs the cut-off signal to enable the controller 120 to disconnect the loop. The power access circuit 100 prevents a short circuit and a current rush caused by reverse power supply connection. When the power supply is reversely connected, an open-circuit impedance is high. When the power supply is correctly connected, a conductive impedance is extremely low. This ensures that the power access circuit 100 has extremely low power consumption. The power access circuit 100 is self-consistent. To be specific, when the power supply is reversely connected, and supplies power to the load 200 via the power access circuit 100, the power supply only disconnects itself, and power supplied to the load 200 by another power supply is not affected. When the power supply is correctly connected, and supplies the power to the load 200 via the power access circuit 100, the power supply can normally supply the power to the load 200.

The power access circuit 100 provided in this embodiment of this application may be applied to a scenario in which a plurality of power supplies are connected in parallel, a plurality of batteries are connected in parallel, or a power supply and a battery are connected in parallel. The power access circuit 100 may also be used in a charging scenario. A charging power supply (also referred to as a charger) can properly charge a battery connected to the load 200 via the power access circuit 100, and keep supplying power to the load 200 independently. Specifically, the charging power supply may be connected via the power supply forward voltage collection port A and the power supply reverse voltage collection port B like a common power supply. In this case, if the charging power supply is reversely connected, an input of the charging power supply may be cut off via the power access circuit 100. When the charging power supply is correctly connected, the charging power supply may supply the power to the load 200 via the power access circuit 100, and/or charge another battery connected via the power access circuit 100. Alternatively, the charging power supply may be directly connected via the power supply port C. In this case, it needs to ensure that the charging power supply is correctly connected. When the charging power supply is correctly connected, the charging power supply may directly supply the power to the load 200, and/or charge another battery connected via the power access circuit 100.

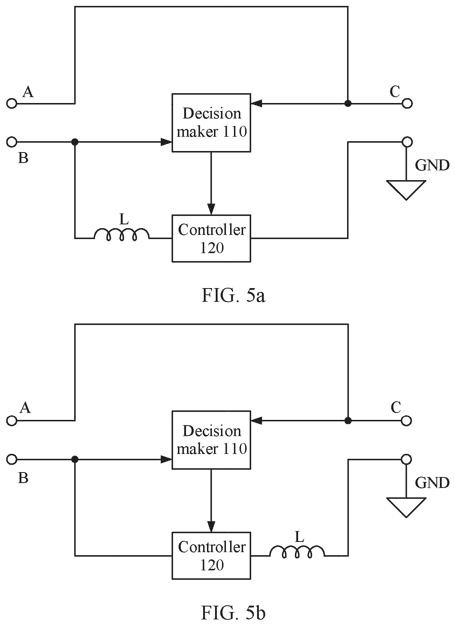

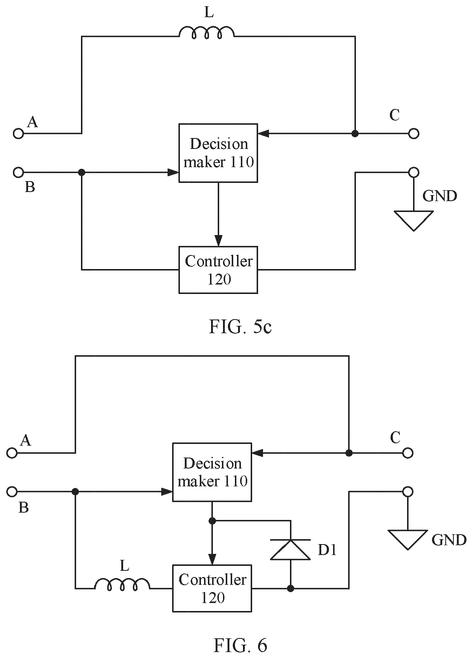

FIG. 5a is an example of another circuit schematic of a power access circuit according to an embodiment of this application; FIG. 5b is an example of another circuit schematic of a power access circuit according to an embodiment of this application; and FIG. 5c is an example of another circuit schematic of a power access circuit according to an embodiment of this application.

In an embodiment of this application, to prevent a current rush caused by another power supply to the controller 120 at a moment at which a power supply is reversely connected via the power access circuit, an inductor or magnetic bead L may be connected to the power access circuit. Specifically, the inductor or magnetic bead L may be disposed in series with any one of the power supply forward voltage collection port A, the power supply reverse voltage collection port B, the power supply port C, and the ground port GND.

Refer to FIG. 5a. In an embodiment of this application, to obtain a strong current rush resistance capability, the inductor or magnetic bead L may be specifically connected between the power supply reverse voltage collection port B and the first end of the controller 120. Alternatively, refer to FIG. 5b. In another embodiment of this application, the inductor or magnetic bead L may be specifically connected between the ground port GND and the second end of the controller 120. Alternatively, refer to FIG. 5c. In another embodiment of this application, the inductor or magnetic bead L may be specifically connected between the power supply forward voltage collection port A and the power supply port C. The following uses an example in which the inductor or magnetic bead L is connected between the power supply reverse voltage collection port B and the first end of the controller 120 for description.

FIG. 6 is an example of another circuit schematic of a power access circuit according to an embodiment of this application.

Refer to FIG. 6. In an embodiment of this application, to protect the control end of the controller 120 and implement stable connection of the loop by the controller 120, a Zener diode D1 may be disposed between the control end of the controller 120 and the second end of the controller 120, and a Zener value of the Zener diode D1 generally needs to be selected as a value higher than a turn-on voltage of the controller 120.

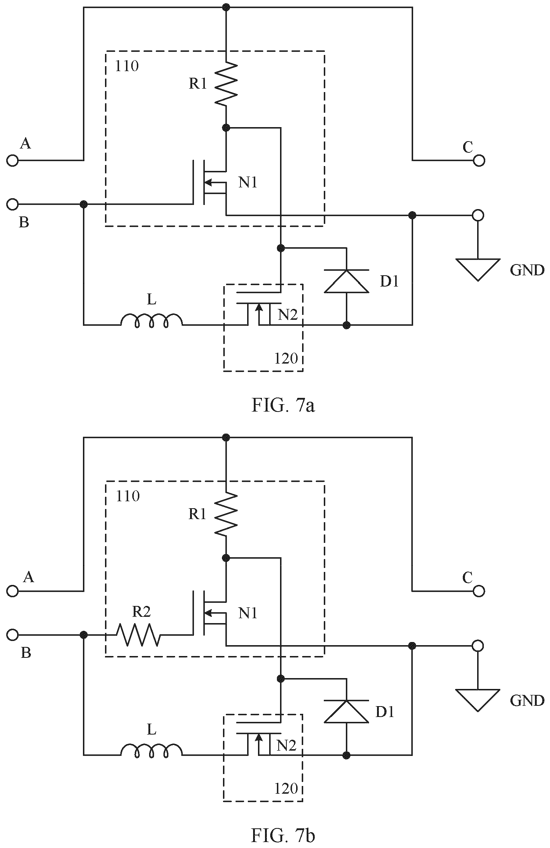

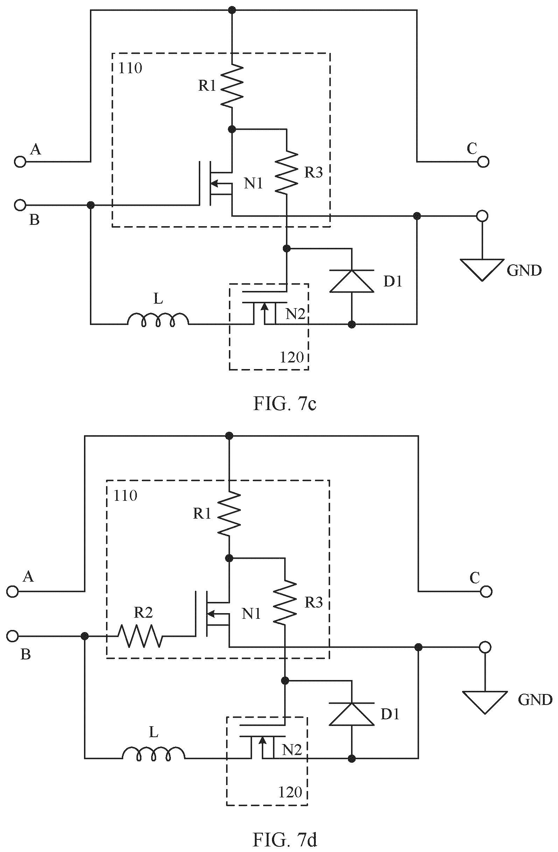

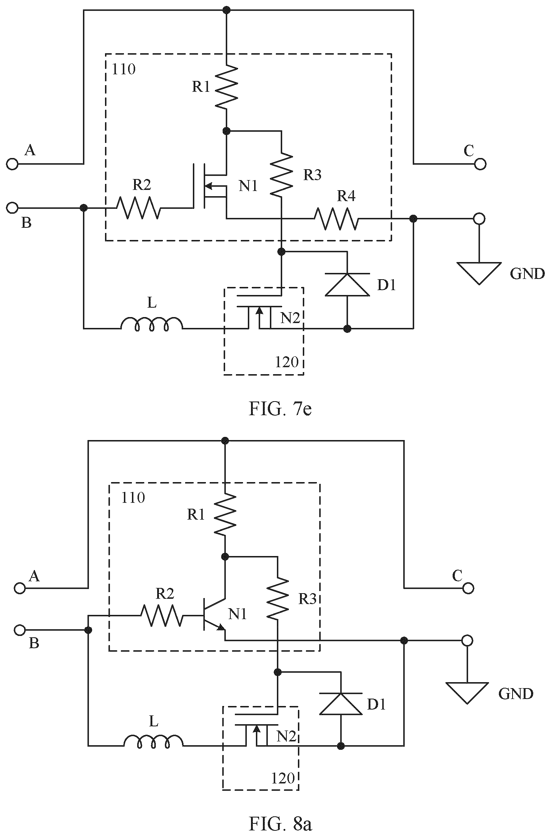

FIG. 7a is an example of a specific circuit schematic of a power access circuit according to an embodiment of this application; FIG. 7b is an example of another specific circuit schematic of a power access circuit according to an embodiment of this application; FIG. 7c is an example of another specific circuit schematic of a power access circuit according to an embodiment of this application; FIG. 7d is an example of another specific circuit schematic of a power access circuit according to an embodiment of this application; and FIG. 7e is an example of another specific circuit schematic of a power access circuit according to an embodiment of this application.

Refer to FIG. 7a. In an embodiment of this application, the decision maker 110 may specifically include a sampling resistor R1 and a first switch N1. One end of the sampling resistor R1 is coupled to the power supply port C, and the other end of the sampling resistor R1 is coupled to a first end of the first switch N1. A second end of the first switch N1 is coupled to the ground port GND, and a control end of the first switch N1 is coupled to the power supply reverse voltage collection port B. A resistance of the sampling resistor R1 may be from thousands of ohms to hundreds of megohms, which is preferably from 10 kΩ to 10 MΩ. The first end of the first switch N1 samples the power supply port C via the sampling resistor R1, the control end of the first switch N1 may directly sample the power supply reverse voltage collection port B, and a decision-making signal (including the conduction signal or the cut-off signal) of the decision maker 110 may be directly output to the control end of the controller 120.

Refer to FIG. 7b to FIG. 7d. In an embodiment of this application, the decision maker 110 may further include a first current-limiting resistor R2 and/or a second current-limiting resistor R3. The first current-limiting resistor R2 is connected between the power supply reverse voltage collection port B and the control end of the first switch N1, and the second current-limiting resistor R3 is connected between the first end of the first switch N1 and the control end of the controller 120. Refer to FIG. 7b. Only the first current-limiting resistor R2 may be disposed in the decision maker 110, a resistance value of the first current-limiting resistor R2 may be from several kilohms to tens of kilohms, and the control end of the first switch N1 samples the power supply reverse voltage collection port B via the first current-limiting resistor R2. Refer to FIG. 7c. Only the second current-limiting resistor R3 may be disposed in the decision maker 110. A resistance value of the second current-limiting resistor R3 may be from several kilohms to tens of kilohms, and the decision-making signal (including the conduction signal or the cut-off signal) of the decision maker 110 is output to the control end of the controller 120 via the second current-limiting resistor R3. Refer to FIG. 7d. Both the first current-limiting resistor R2 and the second current-limiting resistor R3 may be disposed in the decision maker 110. The following uses an example in which both the first current-limiting resistor R2 and the second current-limiting resistor R3 exist in the decision maker 110 shown in FIG. 7d for description.

Refer to FIG. 7e. In an embodiment of this application, to prevent a current rush caused by another power supply to the controller 120 at a moment at which a power supply is reversely connected via a power access circuit, the decision maker 110 may further include a third current-limiting resistor R4 connected between the ground port GND and the second end of the first switch N1. Alternatively, the third current-limiting resistor R4 may be replaced with the inductor or magnetic bead L. This is not limited herein.

An operating principle of the decision maker 110 provided in embodiments of this application is as follows: When the power supply is correctly connected via the power supply forward voltage collection port A and the power supply reverse voltage collection port B, that is, the potential of the power supply forward voltage collection port A is high and the potential of the power supply reverse voltage collection port B is low, the control end of the first switch N1 is at a low voltage, the first switch N1 is turned off, and the first end of the first switch N1 is at a high voltage. The second current-limiting resistor R3 outputs a high voltage to the control end of the controller 120. In this way, the controller 120 can connect the loop, the power supply reverse voltage collection port B and the ground port GND are connected, and the power supply forward voltage collection port A successfully supplies power to the power supply port C in a forward manner. When the power supply is reversely connected via the power supply forward voltage collection port A and the power supply reverse voltage collection port B, that is, the potential of the power supply forward voltage collection port A is low and the potential of the power supply reverse voltage collection port B is high, the control end of the first switch N1 is at a high voltage, the first switch N1 is turned on, and the first end of the first switch N1 is at a low voltage. The second current-limiting resistor R3 outputs a low voltage to the control end of the controller 120. In this way, the controller 120 can disconnect the loop, and the power supply reverse voltage collection port B and the ground port GND are disconnected. This achieves self-consistent anti-reverse logic.

Specifically, refer to FIG. 7a to FIG. 7e. In an embodiment of this application, the first switch N1 may be specifically a negative-channel metal-oxide semiconductor (negative-channel metal-oxide semiconductor, NMOS) transistor. A gate (G) of the NMOS transistor is used as the control end of the first switch N1, a drain (D) of the NMOS transistor is used as the first end of the first switch N1, and a source (S) of the NMOS transistor is used as the second end of the first switch N1.

The NMOS transistor is used as the first switch N1. When the power supply is correctly connected via the power supply forward voltage collection port A and the power supply reverse voltage collection port B, that is, the potential of the power supply forward voltage collection port A is high and the potential of the power supply reverse voltage collection port B is low, the gate (G) of the NMOS transistor is at a low voltage, the NMOS transistor is cut off, and the drain (D) of the NMOS transistor is at a high voltage. The second current-limiting resistor R3 outputs the high voltage to the control end of the controller 120. In this way, the controller 120 can connect the loop, the power supply reverse voltage collection port B and the ground port GND are connected, and the power supply forward voltage collection port A successfully supplies the power to the power supply port C in the forward manner. When the power supply is reversely connected via the power supply forward voltage collection port A and the power supply reverse voltage collection port B, that is, the potential of the power supply forward voltage collection port A is low and the potential of the power supply reverse voltage collection port B is high, the gate (G) of the NMOS transistor is at a high voltage, the NMOS transistor is conducted, and the drain (D) of the NMOS transistor is at a low voltage. The second current-limiting resistor R3 outputs the low voltage to the control end of the controller 120. In this way, the controller 120 can disconnect the loop, and the power supply reverse voltage collection port B and the ground port GND are disconnected. This achieves the self-consistent anti-reverse logic.

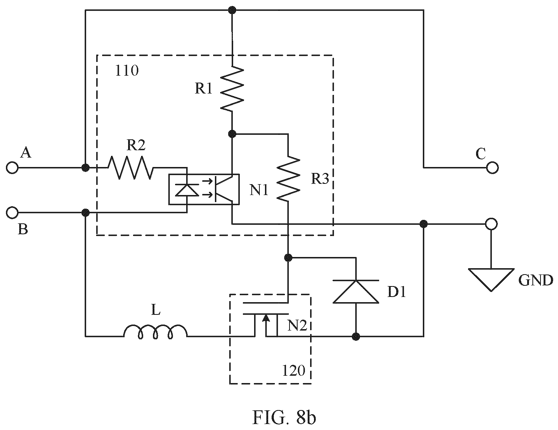

FIG. 8a is an example of another specific circuit schematic of a power access circuit according to an embodiment of this application; and FIG. 8b is an example of another specific circuit schematic of a power access circuit according to an embodiment of this application.

Alternatively, refer to FIG. 8a. In another embodiment of this application, the first switch N1 may be specifically an NPN-type triode. A base (B) of the NPN-type triode is used as the control end of the first switch N1, a collector (CL) of the NPN-type triode is used as the first end of the first switch N1, and an emitter (E) of the NPN-type triode is used as the second end of the first switch N1. The triode is more cost-effective than the NMOS transistor, but consumes more power.

When the NPN-type triode is used to replace the NMOS transistor, the resistance value of the first current-limiting resistor R2 needs to be calculated based on a needed current amplification multiple. Specifically, it is assumed that a voltage at the to-be-connected power supply is V_{bat}. When the power supply is correctly connected via the power supply forward voltage collection port A and the power supply reverse voltage collection port B, that is, the potential of the power supply forward voltage collection port A is high and the potential of the power supply reverse voltage collection port B is low, a voltage at a side connecting the first current-limiting resistor R2 and the power supply reverse voltage collection port B is low, and a current on the first current-limiting resistor R2, that is, a base current I_{B} of the NPN-type triode, is very low. Therefore, a current on the sampling resistor R1, that is, a collector current I_{C} of the NPN-type triode, is also very low, a voltage drop of the sampling resistor R1 is very small, and a voltage V_{CL} at the collector of the NPN-type triode is high. The second current-limiting resistor R3 outputs the high voltage to the control end of the controller 120. In this way, the controller 120 can connect the loop, the power supply reverse voltage collection port B and the ground port GND are connected, and the power supply forward voltage collection port A successfully supplies the power to the power supply port C in the forward manner. When the power supply is reversely connected via the power supply forward voltage collection port A and the power supply reverse voltage collection port B, that is, the potential of the power supply forward voltage collection port A is low and the potential of the power supply reverse voltage collection port B is high, the current I_{B} on the first current-limiting resistor R2 = (V_{C} + V_{bat} - V_{be})/R2. It is assumed that an amplification multiple of the NPN-type triode is β. The voltage drop of the sampling resistor R1 is V_{R1} = R1 * β * (V_{C} + V_{bat} - 0.7)/R2. A voltage at a CL point is V_{CL} = V_{C} - β * R1 * (V_{C} + V_{bat} - 0.7)/R2. After a specific degree of tolerance is reserved, Vₕ is still less than the turn-on voltage Vₜₕ of the controller 120. In this case, the controller 120 may be controlled to be in a disconnected state, and the power supply reverse voltage collection port B and the ground port GND are disconnected. This achieves the self-consistent anti-reverse logic. Herein, V_{be} ≈ 0.7 V.

Alternatively, refer to FIG. 8b. In another embodiment of this application, when the power access circuit is applied to some complex environments, a case in which the load 200 fluctuates greatly, or a case in which there are some other unstable power supplies connected to the load 200, a voltage of the loop of the power access circuit is easily affected, an optical switch may be used to perform optical coupling isolation control on the first switch N1, and the optical switch may specifically use a triode for output, or may use a MOS transistor for output. FIG. 8b is an example in which the optical switch uses the triode for output. Alternatively, in another embodiment of this application, a relay may be used to perform isolation control on the first switch N1.

For example, the first switch N1 is the optical switch. When the power supply is correctly connected via the power supply forward voltage collection port A and the power supply reverse voltage collection port B, that is, the potential of the power supply forward voltage collection port A is high and the potential of the power supply reverse voltage collection port B is low, a light emitting diode of the optical switch is in a reverse cut-off state, the triode of the optical switch is in a low current or cut-off state, the voltage drop of the sampling resistor R1 is very small, and potentials at both ends of the sampling resistor R1 are approximate and are high. The second current-limiting resistor R3 outputs the high voltage to the control end of the controller 120. In this way, the controller 120 can connect the loop, the power supply reverse voltage collection port B and the ground port GND are connected, and the power supply forward voltage collection port A successfully supplies the power to the power supply port C in the forward manner. When the power supply is reversely connected via the power supply forward voltage collection port A and the power supply reverse voltage collection port B, that is, the potential of the power supply forward voltage collection port A is low and the potential of the power supply reverse voltage collection port B is high, the triode is conducted via the light emitting diode of the optical switch, the voltage drop of the sampling resistor R1 is large, and a voltage at one end that is coupled to the sampling resistor R1 and the second current-limiting resistor R3 is low. The second current-limiting resistor R3 outputs the low voltage to the control end of the controller 120. In this way, the controller 120 can disconnect the loop, and the power supply reverse voltage collection port B and the ground port GND are disconnected. This achieves the self-consistent anti-reverse logic.

In an optical coupling isolation manner, impact of fluctuation of the another power supply on the voltage of the loop of the power access circuit can be prevented. This affects a decision-making result of the decision maker 110. In some scenarios in which interference in an environment is strong and fluctuation of a signal of the load 200 is complex, a case in which the power access circuit is affected by the interference can be effectively prevented.

Refer to FIG. 7a to FIG. 8b. In an embodiment of this application, the controller 120 may specifically include a second switch N2, a control end of the second switch N2 is coupled to the output end of the decision maker 110, a first end of the second switch N2 is coupled to the power supply reverse voltage collection port B, and a second end of the second switch N2 is coupled to the ground port GND.

Refer to FIG. 7a to FIG. 8b. In an embodiment of this application, the second switch N2 may be specifically an NMOS transistor, and a gate (G) of the NMOS transistor is used as the control end of the second switch N2. The NMOS transistor is cost-effective, and a conductive impedance may be as low as several milliohms. When the NMOS transistor is normally conducted, energy consumed may be ignored (only several milliwatts are consumed when power of 1 A is supplied). When the power supply is correctly connected via the power supply forward voltage collection port A and the power supply reverse voltage collection port B, that is, the potential of the power supply forward voltage collection port A is high and the potential of the power supply reverse voltage collection port B is low, the first switch N1 is turned off. The second current-limiting resistor R3 outputs a high voltage to the gate (G) of the NMOS transistor. In this way, the NMOS transistor can connect the loop, the power supply reverse voltage collection port B and the ground port GND are connected, and the power supply forward voltage collection port A successfully supplies the power to the power supply port C in the forward manner. When the power supply is reversely connected via the power supply forward voltage collection port A and the power supply reverse voltage collection port B, that is, the potential of the power supply forward voltage collection port A is low and the potential of the power supply reverse voltage collection port B is high, the first switch N1 is turned on. The second current-limiting resistor R3 outputs a low voltage to the gate (G) of the NMOS transistor. In this way, the NMOS transistor can disconnect the loop, and the power supply reverse voltage collection port B and the ground port GND are disconnected. This achieves the self-consistent anti-reverse logic.

Alternatively, in another embodiment of this application, the second switch N2 may be specifically a relay, an optical switch, or the like. This is not limited herein.

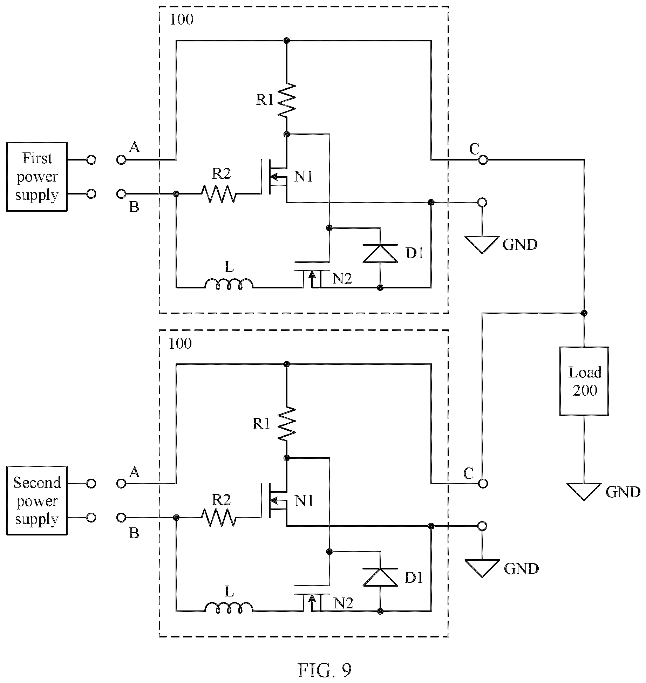

FIG. 9 is an example of another circuit schematic of a power access circuit according to an embodiment of this application.

Refer to FIG. 9. When a plurality of power supplies supply power to the load 200 via a plurality of power access circuits connected in parallel, a power supply forward voltage collection port A and a power supply reverse voltage collection port B of each power access circuit are respectively connected to a positive electrode and a negative electrode of each power supply or battery, a power supply port C of each power access circuit is connected to one end of the load 200, and a ground end of each power access circuit is grounded to the load 200. Each power access circuit prevents a short circuit and a current rush caused by reverse power supply connection. When the power supply is reversely connected, an open-circuit impedance is high. When the power supply is correctly connected, a conductive impedance is extremely low. This ensures that the power access circuit has extremely low power consumption. The power access circuit is self-consistent. To be specific, when the power supply is reversely connected, and supplies the power to the load 200 via the power access circuit, the power supply only disconnects itself, and power supplied to the load 200 by another power supply is not affected. When the power supply is correctly connected, and supplies the power to the load 200 via the power access circuit, the power supply can normally supply the power to the load 200.

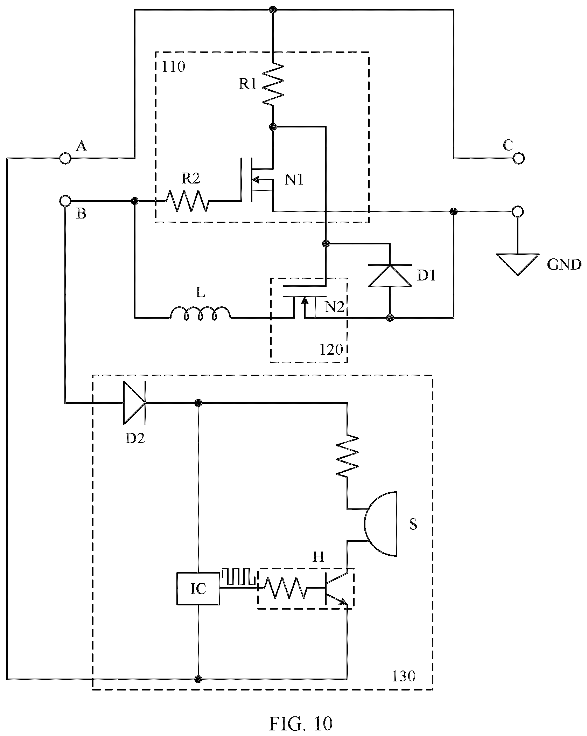

FIG. 10 is an example of another specific circuit schematic of a power access circuit according to an embodiment of this application.

Refer to FIG. 10. In an embodiment of this application, the power access circuit may further include a prompt circuit 130 connected between the power supply forward voltage collection port A and the power supply reverse voltage collection port B. The prompt circuit 130 may notify a user of reverse connection in combination with prompt forms such as sound and light.

Specifically, refer to FIG. 10. The prompt circuit 130 may include an integrated circuit chip IC, a miniature speaker S, a diode D2, and a current amplifier H. A positive electrode of the diode D2 is coupled to the power supply reverse voltage collection port B, and a negative electrode of the diode D2 is coupled to a first input end of the integrated circuit chip IC. When a power supply is correctly connected via the power supply forward voltage collection port A and the power supply reverse voltage collection port B, that is, the potential of the power supply forward voltage collection port A is high and the potential of the power supply reverse voltage collection port B is low, the diode D2 is reversely cut off, and the prompt circuit 130 does not operate. When the power supply is reversely connected via the power supply forward voltage collection port A and the power supply reverse voltage collection port B, that is, the potential of the power supply forward voltage collection port A is low and the potential of the power supply reverse voltage collection port B is high, the diode D2 is forward conducted. Further, a light emitting diode with a color (for example, red or yellow) for alerting may alternatively be used as the diode D2, and emits light when the light emitting diode is forward conducted. A second input end of the integrated circuit chip IC is coupled to the power supply forward voltage collection port A, and an output end of the integrated circuit chip IC is coupled to an input end of the current amplifier H. The integrated circuit chip IC incorporates voice prompts like "reverse connection" or "installation error". When the diode is forward conducted, the integrated circuit chip IC is enabled, and the output end of the integrated circuit chip IC sends a pre-made voice prompt waveform to the input end of the current amplifier H. The current amplifier H may include a resistor and a triode. The resistor is connected in series between a base (B) of the triode and the output end of the integrated circuit chip IC, an emitter (E) of the triode may be coupled to the power supply forward voltage collection port A, a collector (CL) of the triode, as an output end of the current amplifier H, is coupled to one end of the miniature speaker S, the other end of the miniature speaker S is coupled to the negative electrode of the diode, and a resistor may alternatively be disposed between the other end of the miniature speaker S and the negative electrode of the diode. After amplifying a current, the triode drives the miniature speaker S to produce sound, to prompt a user for reverse connection.

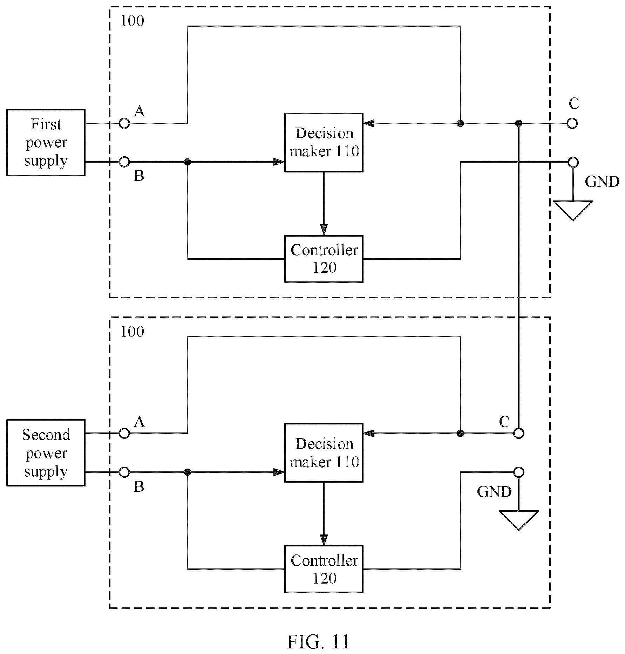

FIG. 11 is an example of a circuit schematic of a power supply apparatus according to an embodiment of this application.

The power access system provided in embodiments of this application may be disposed on a power supply side. To be specific, the power supply apparatus may include a plurality of power supplies and the power access system. The power access system includes power access circuits 100 that one-to-one correspond to the plurality of power supplies. Power supply ports C of the plurality of power access circuits 100 are connected to each other. A power supply port C and a ground port GND of one power access circuit 100 are used as external ports. Identifiers for preventing reverse connection may be set on the external ports. For example, a "+" identifier is used to identify the power supply port C, and a "-" identifier is used to identify the ground port GND. In FIG. 11, two power supplies and two corresponding power access circuits 100 are used as an example for description. A plurality of groups of power supplies and corresponding power access circuits 100 may be disposed in the power supply apparatus.

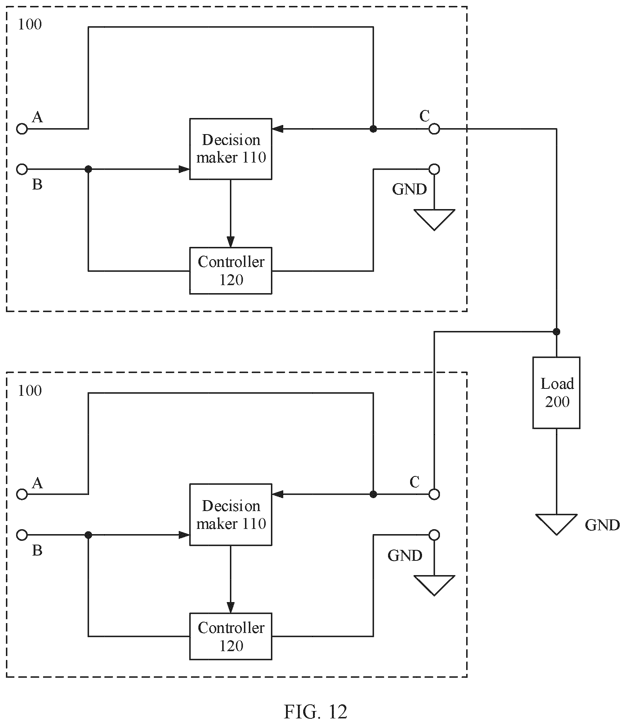

FIG. 12 is an example of a circuit schematic of a power-consuming apparatus according to an embodiment of this application.

The foregoing power access system provided in embodiments of this application may be disposed on a load side, that is, the load 200 and a plurality of power access circuits 100 may be disposed in the power-consuming apparatus. One end of the load 200 is grounded, the other end of the load 200 is connected to a power supply port C of each power access circuit 100, and a power supply forward voltage collection port A and a power supply reverse voltage collection port B of each power access circuit 100 are used as external ports. Identifiers for preventing reverse connection may be set on the external ports, to prevent reverse connection caused by a user operation. For example, a "+" identifier is used to identify the power supply forward voltage collection port A, and a "-" identifier is used to identify the power supply reverse voltage collection port B. In FIG. 12, one load 200 and two power access circuits 100 are used as an example for description. A plurality of power access circuits 100 may alternatively be set in the power-consuming apparatus.

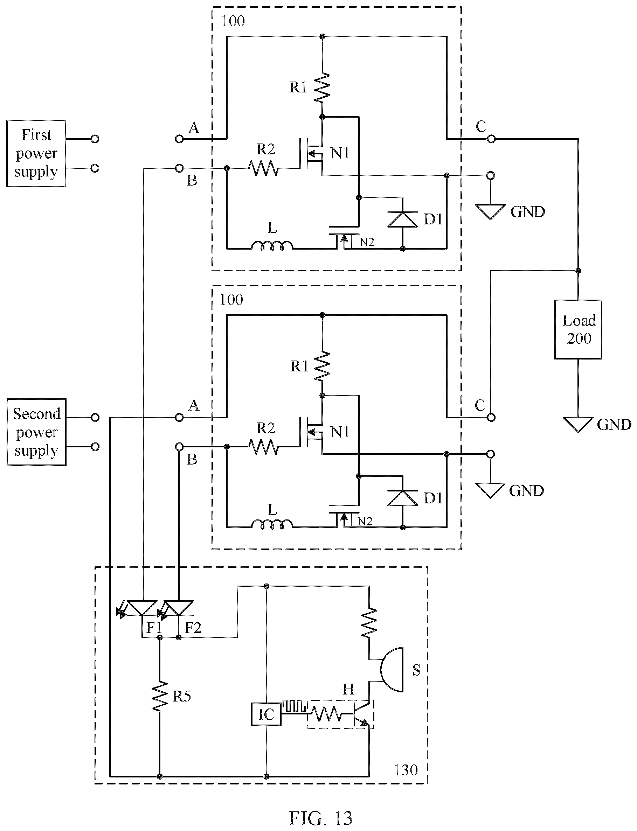

FIG. 13 is an example of a specific circuit schematic of a power supply apparatus according to an embodiment of this application.

Refer to FIG. 13. In an embodiment of this application, when a plurality of parallel power access circuits 100 are disposed in a power-consuming apparatus, the plurality of power access circuits 100 may share a sound generation unit of a same prompt circuit 130, and the sound generation unit may include the integrated circuit chip IC, the miniature speaker S, the current amplifier H, and the like. A plurality of light emitting diodes connected to power supply reverse voltage collection ports B of the plurality of power access circuits 100 in a one-to-one correspondence may be disposed in the prompt circuit 130; positive electrodes of the plurality of light emitting diodes are coupled to the corresponding power supply reverse voltage collection ports B; and negative electrodes of the plurality of light emitting diodes are connected to each other and to a resistor R5 in series, and are coupled to a power supply forward voltage collection port A of any power access circuit 100. When a power supply corresponding to a power access circuit 100 is reversely connected, a connected light emitting diode is on. A light emitting diode at a different position being on represents that a corresponding power supply is reversely connected. A user can determine which power supply is reversely connected by viewing the light emitting diode at the different position being on. For example, in FIG. 13, a first power supply corresponds to a first light emitting diode F1, and a second power supply corresponds to a second light emitting diode F2. When the first power supply is reversely connected, the first light emitting diode F1 is on, and the miniature speaker S prompts an alert tone. When the second power supply is reversely connected, the second light emitting diode F2 is on, and the miniature speaker S prompts an alert tone. When both the first power supply and the second power supply are reversely connected, both the first light emitting diode F1 and the second light emitting diode F2 are on, and the miniature speaker S prompts an alert tone. When both the first power supply and the second power supply are correctly connected, both the first light emitting diode F1 and the second light emitting diode F2 are off, and the miniature speaker S has no alert tone.

In the power access system, the power supply apparatus, and the power-consuming apparatus provided in embodiments of this application, the NMOS transistor that is cost-effective and easy to obtain and whose conductive impedance is low is used as the switch. In this way, when the power supply is correctly connected, a conduction loss of the power access circuit is small. When the power supply is reversely connected, the connected loop is disconnected, and almost no loss occurs. This achieves self-consistent access. Further, it is considered that a current may change abruptly for short time when the power supply is reversely connected. This may cause adverse impact on the controller, the inductor or magnetic bead is connected in series to the power access circuit to prevent such current rush. In addition, alternatively, in the power access circuit, an optocoupler triode or an optocoupler MOS control may be used as the switch to isolate the control from the power supply to a specific extent, to prevent misjudgment caused by interference at the control end of the switch. In addition, the power access circuit can help, by providing audible and visible alerts, the user perform correction in time.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A power access system, wherein the power access system is configured to prevent reverse connection of a power supply, the power access system comprises at least two power access circuits, and one of the at least two power access circuits comprises a power supply forward voltage collection port, a power supply reverse voltage collection port, a decision maker, and a controller;
a power supply voltage is used to supply power to a load via the power access circuit;
the power supply forward voltage collection port is configured to collect a forward power supply voltage provided by a positive electrode of the power supply, and the power supply reverse access port is configured to collect a reverse power supply voltage provided by a negative electrode of the power supply;
the decision maker is configured to output a control signal to the controller based on a comparison result of the voltage collected by the power supply forward voltage collection port and the voltage collected by the power supply reverse voltage collection port; and
the controller is configured to connect or disconnect, based on the control signal, a path through which the power supply voltage supplies the power to the load.

2. The power access system according to claim 1, wherein the power access circuit further comprises a power supply port and a ground port, the power supply port is configured to couple to a load, and the ground port is configured to be grounded;
the power supply port is coupled to the power supply forward voltage collection port;
a first end of the decision maker is coupled to the power supply reverse voltage collection port, and a second end of the decision maker is coupled to the power supply port or the power supply forward voltage collection port; and
the controller is coupled between the power supply reverse voltage collection port and the ground port.

3. The power access system according to claim 2, wherein the decision maker comprises a sampling resistor and a first switch;
one end of the sampling resistor is coupled to the power supply port, and the other end of the sampling resistor is coupled to a first end of the first switch; and
a second end of the first switch is coupled to the ground port, and a control end of the first switch is coupled to the power supply reverse voltage collection port.

4. The power access system according to claim 3, wherein the first switch is a transistor, an optical switch, or a relay.

5. The power access system according to claim 3 or 4, wherein the decision maker further comprises a first current-limiting resistor and/or a second current-limiting resistor;
the first current-limiting resistor is connected between the power supply reverse voltage collection port and the control end of the first switch; and
the second current-limiting resistor is connected between the first end of the first switch and a control end of the controller.

6. The power access system according to any one of claims 3 to 5, wherein the decision maker further comprises a third current-limiting resistor connected between the ground port and the second end of the first switch.

7. The power access system according to any one of claims 2 to 6, wherein the controller comprises a second switch, a control end of the second switch is coupled to an output end of the decision maker, a first end of the second switch is coupled to the power supply reverse voltage collection port, and a second end of the second switch is coupled to the ground port.

8. The power access system according to claim 7, wherein the second switch is an NMOS transistor, a relay, or an optical switch.

9. The power access system according to any one of claims 2 to 8, wherein the power access circuit further comprises an inductor or magnetic bead connected in series to any one of the power supply forward voltage collection port, the power supply reverse voltage collection port, the power supply port, and the ground port.

10. The power access system according to claim 9, wherein the inductor or magnetic bead is connected between the power supply reverse voltage collection port and a first end of the controller.

11. The power access system according to any one of claims 2 to 10, wherein the power access circuit further comprises a Zener diode connected between the control end of the controller and a second end of the controller.

12. The power access system according to any one of claims 2 to 11, wherein the power access circuit further comprises a prompt circuit connected between the power supply forward voltage collection port and the power supply reverse voltage collection port;
the prompt circuit comprises an integrated circuit chip, a miniature speaker, a diode, and a current amplifier;
a positive electrode of the diode is coupled to the power supply reverse voltage collection port, a negative electrode of the diode is coupled to a first input end of the integrated circuit chip, a second input end of the integrated circuit chip is coupled to the power supply forward voltage collection port, and an output end of the integrated circuit chip is coupled to an input end of the current amplifier;
an output end of the current amplifier is coupled to one end of the miniature speaker, and the other end of the miniature speaker is coupled to the negative electrode of the diode; and
the integrated circuit chip is configured to output a specified waveform current to the current amplifier when the diode is forward conducted, to enable the current amplifier to amplify the specified waveform current and drive the miniature speaker to produce sound.

13. The power access system according to claim 12, wherein the diode is a light emitting diode.

14. The power access system according to claim 12 or 13, wherein the at least two power access circuits share the same prompt circuit; the prompt circuit comprises a plurality of light emitting diodes connected to power supply reverse voltage collection ports of the plurality of power access circuits in a one-to-one correspondence; positive electrodes of the plurality of light emitting diodes are coupled to the corresponding power supply reverse voltage collection ports; and negative electrodes of the plurality of light emitting diodes are connected to each other and to a resistor in series, and are coupled to a power supply forward voltage collection port of any power access circuit.

15. A power supply apparatus, comprising the power access system according to any one of claims 1 to 14 and a plurality of power supplies connected to the power access circuits in the power access system in a one-to-one correspondence.

16. A power-consuming apparatus, comprising a load, and the power access system according to any one of claims 1 to 14.
